# EUROPEAN PATENT SPECIFICATION

(11) **EP 2 936 330 B1**
(45) Date of publication and mention of the grant of the patent: **11.04.2018**
(21) Application number: 13865995.8
(22) Date of filing: 18.12.2013
(51) Int. Cl.: G06F 15/16, G06F 3/14, H04M 1/725, H04L 29/06, H04W 4/00, H04W 12/06, H04W 12/02

(54) **SHARING OF SELECTED CONTENT FOR DATA COLLECTION**
GEMEINSAME NUTZUNG VON AUSGEWÄHLTEN INHALTEN ZUR DATENSAMMLUNG
PARTAGE D'UN CONTENU SÉLECTIONNÉ POUR UNE COLLECTE DE DONNÉES

(30) Priority: 20.12.2012 US 201213722108
(43) Date of publication of application: 28.10.2015
(73) Proprietor: Intel Corporation, Santa Clara, CA 95054 (US)
(72) Inventor: POORNACHANDRAN, Rajesh, Portland, Oregon 97229 (US); PRAKASH, Gyan, Beaverton, Oregon 97006 (US); DADU, Saurabh, Tigard, Oregon 97223 (US)
(74) Representative: Maiwald Patentanwalts GmbH
(86) International application number: PCT/US2013/076205
(87) International publication number: WO 2014/100221

(56) References cited:
- JP-A- 2008 077 618
- US-A1- 2006 075 228
- US-A1- 2006 118 614
- US-A1- 2007 113 190
- US-A1- 2010 082 784
- US-A1- 2011 165 836
- US-A1- 2011 167 082
- Chapter: "SYSTRAN Enterprise Server 6 - API Reference Guide i Table of Contents", , 25 November 2011 (2011-11-25), pages 1-43, XP055262058, Retrieved from the Internet: URL:http://www.systransoft.com/download/us er-guides/old/systran-ses6-api-reference-g uide.pdf [retrieved on 2016-04-01]

## Description

### BACKGROUND

People are asked to provide confidential, private or sensitive information in a variety of circumstances. For example, a patient has to fill out a health history questionnaire when visiting a doctor's office for the first time and a person seeking a passport has to supply a social security number when applying for a passport. Providing such information orally or in written form can cause the information to be intercepted - spoken information can be overhead and pieces of paper can be misplaced or not properly disposed of.

US 2007/113 190 A1 discloses methods and a system for borrowing and giving back a window from a host computer to a remote computer. The remote computer accesses the host computer and temporarily takes control of the window over from the host computer. After that, control of the window is returned back to the host computer.

US 2006/075 228 A1 discloses a process for the automatic masking of sensitive information. In response to being recognized as sensitive, the information is stored in encrypted form together with instructions how a decryption key may be obtained.

### BRIEF DESCRIPTION OF THE DRAWINGS

FIG. 1 is a diagram of an exemplary environment in which technologies described herein can be implemented.
FIG. 2 illustrates selected content presented at an exemplary requesting computing device user interface being shared with a mobile computing device.
FIG. 3 is a block diagram of a first exemplary requesting computing device.
FIG. 4 is a flowchart of a first exemplary method of sharing selected content.
FIG. 5 is a flowchart of a second exemplary method of sharing selected content.
FIG. 6 is a flowchart of a third exemplary method of sharing content.
FIG. 7 is a flowchart of a fourth exemplary method of sharing content.
FIG. 8 is a block diagram of an exemplary computing device for implementing technologies described herein.
FIG. 9 is a block diagram of an exemplary processor core that can execute instructions as part of implementing technologies described herein.

### DETAILED DESCRIPTION

The invention is defined by the appended independent claims.

Technologies described herein allow a selected portion of content presented at a computing device display to be shared with nearby mobile devices. The sharing allows a mobile device user to supply private, confidential or sensitive information to the computing device in a secure manner. Consider the situation where a bank customer has to provide an account number to a bank teller to perform an in-person transaction. The bank teller selects a portion of the content presented at a display of his or her computer that includes an input field for a bank account number. A wireless communication link is established between the bank customer's wireless device and the bank teller's computer and the selected content is shared with the mobile device. The selected content is presented at a display of the customer's mobile device display. The customer inputs his or her account number at the mobile device, and the bank account number is passed to the bank teller's computer. Thus, the bank teller receives the customer's bank account number without the customer having to speak the bank account number or write it down on a piece of paper.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, known structures and devices are shown in block diagram form in order to facilitate a description thereof. The intention is to cover all modifications, equivalents and alternatives within the scope of the claims.

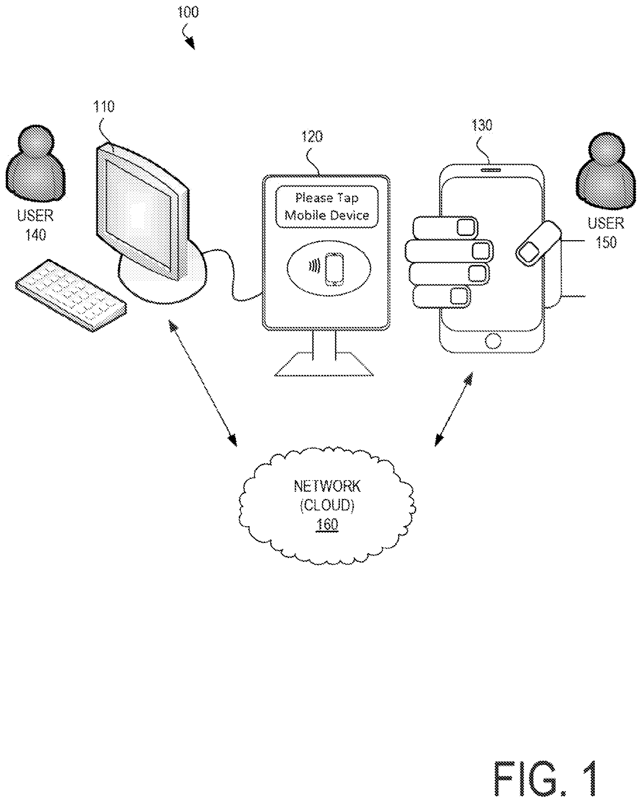

FIG. 1 is a diagram of an exemplary environment 100 in which technologies described herein can be implemented. The environment 100 comprises a requesting computing device 110 that includes a wireless communication component 120, shown as an NFC enabled terminal. The requesting computing device 110can communicate with a receiving computing device, shown as a mobile computing device 130. The requesting computing device 110 is operated by a user 140 that is requesting information from a user 150 of the mobile computing device 130. The requested information can comprise information that the user 150 deems private, such as a passport number, a social security number, or other personally identifying information. In some embodiments, the computing device 110 may not be operated by a user 140. For example, the requesting computing device 110 can be a self-serve kiosk.

The requesting computing device 110 can be any computing device, such as a desktop computer, point of sale (POS) terminal or mobile device (e.g., smartphone, laptop computer and tablet computer). The wireless communication component 120 allows the requesting device 110 to become securely paired with the mobile device 130 using wireless communication technologies. In FIG. 1, the mobile computing device 130 is also NFC enabled, allowing the requesting and mobile devices to be securely paired when they are brought within several centimeters of each other. (A mobile computing device user is typically instructed to "tap" or "bump" their NFC enabled mobile device to an NFC terminal in order to create a wireless connection between the two devices.)

The wireless communication component 120 can be separate from or integrated with the requesting computing device 110.For example, in embodiments where the requesting computing device 110 comprises two displays, a first display facing the user 140 and a second display facing the mobile device user 150, the wireless communication component 120 can be part of the seconddisplay facing the mobile device user 150. The mobile computing device 130 can be any mobile computing device such as a smartphone, tablet computer or laptop computer. Wireless communication between the requesting and mobile computing devices using NFC is convenient as the close proximity between devices needed to establish an NFC connection (roughly four centimeters or less) makes it less likely that communication between the devices is intercepted. However, other wireless technologies such as Wi-Fi or Bluetooth® can be used.

The requesting and mobile computing devices 110 and 130 are in communication with a network or cloud 160, which can be a Local Area Network (LAN), Wide Area Network (WAN) or the Internet. The devices 110 and 130 can communicate with cloud-based services or computing resources as part of pairing the two devices, translating information passed between the devices or passinginformation between the devices.

Although the embodiments discussed herein primarily concern a requesting computing device sharing selected content with a mobile computing device, the disclosed technologies provide for the sharing of selected content with any kind of receiving computing device. Requesting and receiving computing devices can be mobile or non-mobile devices.

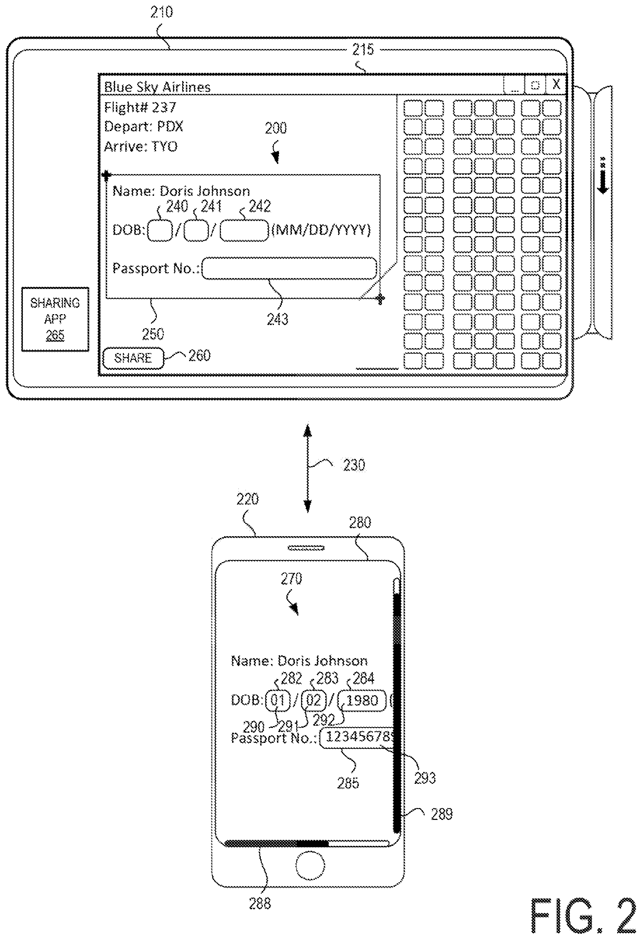

FIG. 2 illustratesselected content200 presented atan exemplary requesting computing device user interface 210 being shared with a mobile computing device 220. The user interface 210comprises a window 215 of an airline reservation application. The window 215 comprises flight information for an international flight, a flight seating chart and a customer name. The window 215further shows data fields 240-243for the customer's date of birth and passport number.

To collect this information, the requesting computing device shares the selected content 200 with the customer's mobile device 220. The selected content 200 can be selected through various methods, such as the requesting device user drawing a bounding box 250 in the user interface 210 or selecting a window to be shared (e.g., window 215). Alternatively, content can be selected for sharing via device or application settings. For instance, a user can configure reservation application settings to indicate that the date-of-birth and passport number data fields 240-243 are to be shared when the requesting device user indicates that selected content is to be shared with a mobile device.By configuring system or application settings, a requesting device user can be relieved from having to repeatedly select the same portion of a user interface if the same information is typically requested of customers or others. The selected content 200, once selected, can be shared through selection of a "share" button 260, by dragging the selected content 200 to a sharing application icon 265 or by another method.

After the selected content has been shared, a reproduction 270 of the selected content is presented at a user interface 280 of the mobile computing device 220. The reproduction 270 comprises date of birth and passport number data fields 282-285. Scrollbars 288-289 and shrink,magnifyand pan touch gestures can be used to maneuver within and manipulate there produced selected content270. The mobile user provides data values 290-293at the user interface 280, which are sent to the requesting computing device. The data values 290-293 can be sentas the mobile device user supplies input to the mobile device interface 280. That is, at least a portion of the data values 290-293 can be sent (e.g., character-by-character) before a data field is filled. Alternatively, data values are sent after any one of the data fields has been fully entered.

The selected content 200 is shared with the mobile device 220 via acommunication link 230. Typically, the communication link 230 is a direct peer-to-peer connection. That is, the mobile and requesting computing devices communicate without the presence of an intervening computing device to relay information between the mobile and requesting devices. The communication link 230 can be a wireless link employing any wireless technology, such as NFC, Wi-Fi or Bluetooth®. In some embodiments, the link 230 is established using NFC and then switches over to Wi-Fi, Bluetooth® or other wireless communication technology. In other embodiments, the link 230is established and maintained using NFC. In still other embodiments, the communication link 230 is an indirect connection that uses other computing devices, such as network routers, network switches and other cloud-based computing resources and services. For example, with reference to FIG. 1, the mobile and requesting computing devices can communicate via an indirect connection that utilizes the network or cloud 160.

Sharing the selected content 200 can comprise sending selected content display information to the mobile computing device. The selected content display information comprises information that asharing application executable on the mobile device 220 can use regenerate the reproduction 270 of the selected content 200.

In some embodiments, the selected content display information comprises data used by the requesting device to display the selected content 200 at the user interface 210, such as frame buffer data associated with the selected content. Once the reproduction 270is displayed at the user interface 280, the mobile device user can provide values for the data fields 282-285 by supplying user input to the mobile device 220.

Themobile device 220 can supply the user input to the requesting computing device as it is received at the mobile device. The requesting computing device can update the user interface 210based on the received mobile user input, and send updated selected content display information to the mobile device. The sharing application can update the reproduction 270 based on the updated selected content display information. Thus, the selected content 200 and the reproduction 270 of the selected content 200 can bekept synchronized as the mobile user provides input to the mobile device.

For example, when a mobile device enters numbers in the "Passport No." data field 285, the numbers are sent to the receiving computing device as they are entered. The requesting computing device updates the selected content 200 as the user enters individual passport numbers at the mobile device and sends updated selected content display information so that the user-supplied numbers are also displayed in the mobile device interface 280. In this manner, the mobile device user supplies data values for data fields displayed in the reproduction 270 of the selected content, data values that are echoed in the requesting computing device user interface 210 and received by the reservations application. The requesting computing device user can end sharing of the selected content 200 once the mobile user supplied the requested information.

Alternatively, to keep received data values from being made known to the requesting device operator, the requesting device can send updated shared content display information to the mobile device without displaying the received data values. For example, the shared content 200 can be left un-updated in response to receiving data values, or the data values can be masked in the receiving display. For instance, as mobile input data is received from the mobile device, masking characters, such as asterisks, pound signs, dollar signs or any other symbol,can be displayed in the shared content 200 data fields.

In other embodiments, the mobile device does not receive updated selected content display information from the requesting computing device. In such embodiments, the mobile device collects data values for the data fields contained in the shared content and supplies data values to the receiving computing device as they are fully entered. In such embodiments, the selected content display information can comprise, for example, text strings (e.g., "DOB:" and "Passport No."); text font, size, color and language;data field identifiers (e.g., "birth_month," "birth_day," "birth_year" "passport_no"); user interface element identifiers for the data fields (window, drop-down list, etc.); icons; images;audio elements, positional information for the various interface elements and the like. The mobile device can generate the reproduction 270 based on the selected content display information. The reproduction 270 of the selected content does not need to be an exact reproduction of the selected content 200 displayed in the user interface 210. For example, the reproduction 270 can comprise text displayed in size, font, color and/orlanguagedifferent from that used in the user interface 210. The layout of the reproduction 270 can vary from that in the user interface 210 as well.

In these embodiments, the data values can be displayed at the mobile device without also being displayed at the requesting computing device. The reproduction 270 can further comprise privacy flags or other user elements that the mobile device user can select to indicate that individual data values are not to be displayed at the requesting computing device. Privacy indicators for data values can be sent to the requesting computing device along with the data values.

In various embodiments, a requesting computing device can share selected content with a plurality of mobile devices. For example, the requesting computing device can send shared content to more than one mobile device and individual mobile devices can send data values back to the requesting device. For instance, a requesting computing device at an airport terminal gate may need to collect information from passengers on a flight that has been delayed or overbooked. The requesting device operator can select content comprising, for example, whether a passenger is interested in giving up his or her seat in return for a flight voucher or when the passenger needs to arrive at their destination. The mobile devices receiving the shared content can supply any data values entered by their respective users.

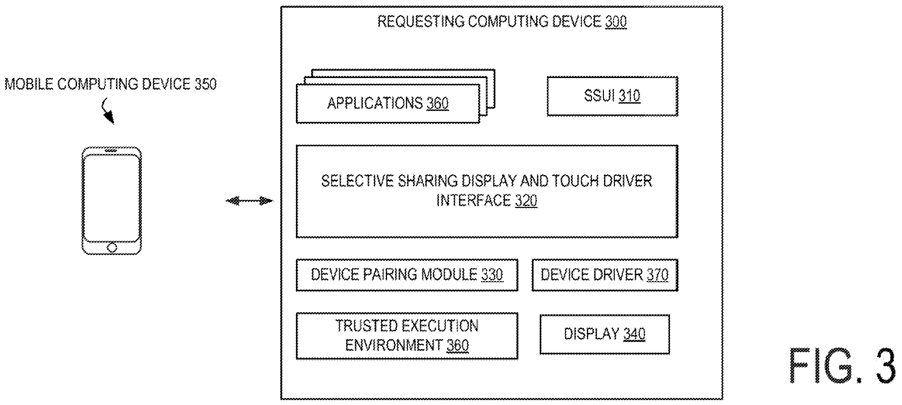

FIG. 3 is a block diagramof a first exemplary requesting computing device 300. The requesting device 300 comprises a selective sharing user interface (SSUI) 310, a selective sharing display and touch driver interface 320 and a selective sharing device pairing module 330. The SSUI 310 allows a user to configure selective sharing settings, such as whether to allow sharing of selected content, and to configure selective sharing policies at the device, application or user level. The SSUI 310 can allow a user to select content presented at a display 340of the requesting device 300 for sharing, and to indicate that selected content is to be shared with a mobile computing device 350.

The selective sharing display and touch driver interface 320 provides an interface between the SSUI 310 orany of the applications 360 (or any software layers between the SSUI 310 or applications 360 and the interface 320, such as application frameworks or middleware) and a device driver 370. The interface 320 interacts with the display device driver 370to obtain a selected portion of the content presented at the display 340. The interface 320 can also receive data values (e.g., character-by-character, as individual data values are fully entered at a mobile device) for data fields presented in the selected content shared with the mobile device, and supply the data values to the corresponding application. For example, with reference to FIG. 2, the interface 320 can receive the data values290-293 for the data fields 282-285, and pass the received data values to the airline reservation application.

The device pairing module 330 can securely pair a mobile device 350 to the requesting computing device 300. In some embodiments, the pairing module 330 can utilize a trusted execution environment 360 to perform the device pairing. In some embodiments, the pairing module 330 can authenticate the mobile device before pairing. For example, as part of pairing devices, the pairing module 330 can perform authentication of a mobile device 350 and/or a mobile device user. In addition, the requesting computing device 300 can provide information to the mobile device(e.g., requesting device certificates, certifying authority, etc.) for authentication of the requesting computing device 300.

The mobile computing device 350 can comprise a secure environment in which a module (not shown) that presents shared selected content and receivesdata values from a mobile device user operates. The secure environment can comprise one or secure elements, such as a secure processor and secure memory. The module can be software and/or firmware executing on a secure processor, and the secure memory can storedata values supplied by the mobile device user or user profiles containing confidential data that can be used as default values for data fields in shared content. In various embodiments, whether a secure environment is utilized at the mobile device for presenting the shared selected content and capturing data values from the mobile device user can depend on the information being requested. For example, a privacy flag can be associated with an application or individual data fields within an application. If the privacy flag for a selected application or data field is set or the privacy value for a data field exceeds a specified privacy threshold, the mobile device can collect the information from the user in a secure environment.

In various embodiments, the selected content can be displayed at the receiving and mobile devices in different languages. Either device cantranslate(or cause to have translated) information sent to or received by the other device. For example, before sending selected content display information to a mobile device, the receiving device can receive a language preference from the mobile device and translate any text in the selected content that is in a different language from the preferred mobile device language. Alternatively, the mobile device can receive language indicators of text strings included in the selected content, determine that text strings are to be translated based on mobile device language settings, and translate the text strings.

Information sent to the requesting device can include language indicators indicating in which languagemobile user-provided data values are provided. In some embodiments, translation can be performed by using image processing techniques on an image of the selected content to identify text in the selected portion and determine the language in written the text is displayed, translating the identified text, and replacing the original text with the translated text in the image. Translation is not limited to text. Audio elements in selected content, such as instructions for filling in data fields, can be translated as well.

In some embodiments, after the mobile device has received selected content display information, the mobile device can retrieve data values associated with data fields in the shared content, and auto-populate the data fields with the retrieved values. The data fields can be identified via data field indicators provided in the selected content display information or in another manner (e.g., the mobile device can perform image analysis on an image of the shared content to identify text strings in the shared content). For example, in response to receiving a data field indicator "Passport No.", the mobile device can retrieve the mobile device user's passport number, which could be stored locally at the mobile device (in secure memory or elsewhere) or externally, such as in the cloud, and display the retrieved value in the passport number data field.

In some embodiments, the selected content can be displayed at a second display of the requesting computing device, in addition to or instead of the selected content being shared with a mobile computing device. The second display can be any type of second display connected to or integrated in the requesting computing device, such as an outward facing display of a dual-sided display. If the second display is a touch display or can otherwise receive input (via a keypad or keyboard), the mobile device user can provide the requested information at the second screen. In some embodiments, the selected content can be displayed in different languages at the first and second displays. The second display can present the mobile device user with the option to select the language to be used for presenting the selected content at the second display.

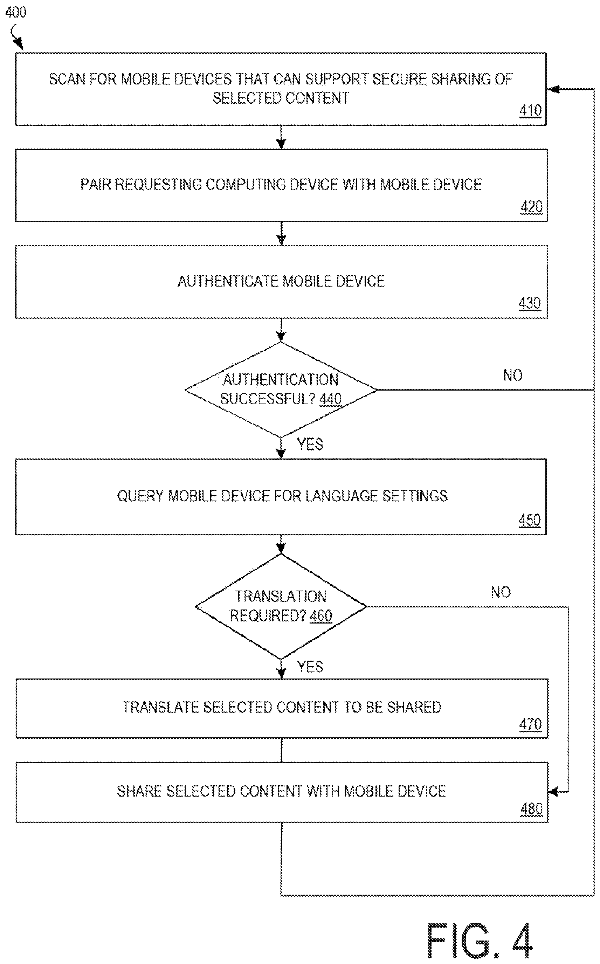

FIG. 4 is a flowchart of a first exemplary method 400 of sharing selected content. The method 400 can be performed by, for example, a computer in a federal government social security office that has an attached NFC enabled terminal. At process act 41 0, the computer scans for mobile devices that can support the secure sharing of selected content. The scanning can comprise the computer establishing a wireless connection with nearby mobile devices and querying the devices whether they host, for example, a sharing application within which selected content can be presented at the mobile device. In the example, a man whom the computer operator is assisting is hesitant to provide his social security number vocally. The computer has identified the man's NFC enabled smartphone in a scan and informs the operator that the smartphone is capable of supporting the secure sharing of selected content. The operator informs the manthat he can provide his social security numberusing his smartphone via the computer's NFC terminal.

At process act 420, the requesting computing device is paired with the mobile device. In the example, the man taps his smartphone to the NFC enabled terminal and the requesting computing device is paired with the smartphone. At process act 430, the mobile device is authenticated. In the example, the computer authenticates the mobile device by submitting information about the mobile device to a cloud-based authentication service that returns a certificate to the computer indicating that the social security number and any other personally identifying information received from the smartphone corresponds to the person in possession of the device. If device authentication is successful at process act 440, the requesting device queries the mobile device for language settings at process act 450. If device authentication is unsuccessful, the method returns to process act 410. In the example, the smartphone is authenticated and the computer queries the smartphone for language settings. The smartphone returns an indication that the smartphone language isset to German.

If, at process act 460, content selected for sharing is to be translated, the method continues to process act 470 and translates the selected content to be shared. In the example, the computing device determines that text is to be translated as the information presented in the computer's display is in English. The computer translates the selected content, which comprises English text strings and comprises a data field for the man's social security number, by submitting the English text strings to a cloud-based translation service. At process act 480, the selected content is shared with the mobile device. In the example, the selected content to be shared is sent to the mobile device. The information sent to the mobile device comprises the translated text strings, the size of the shared content, the location of individual elements (text strings, images, data fields), data field identifiers and the like. In alternative embodiments, the method 400 can comprise more or fewer process acts than those shown in FIG. 4. For example, the mobile device user can be asked for permission for the mobile device to be paired. Furthermore, the requesting computing device may also be authenticated.

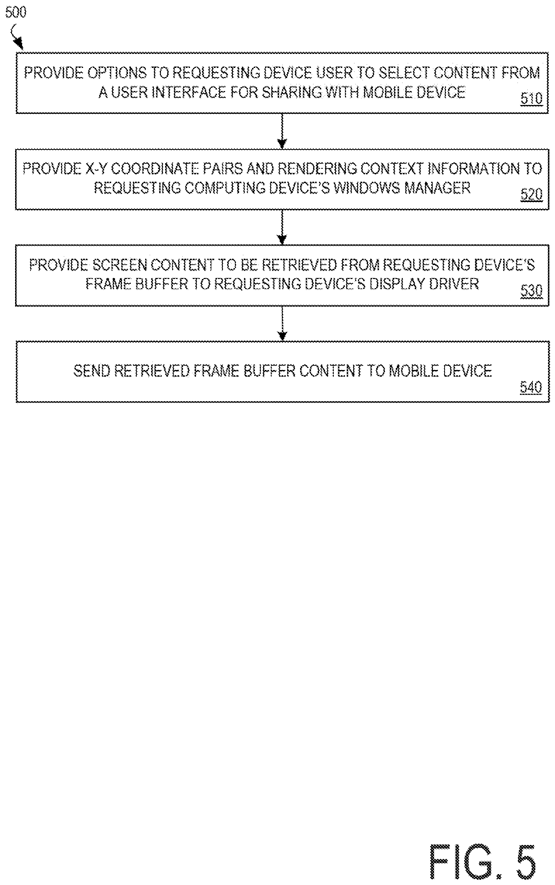

FIG. 5 is a flowchart of a second exemplary method 500 of sharing selected content. The method 500 can be performed by, for example, a point of sale (POS) terminal at a retail store comprising a display and an NFC enabled terminal. At process act 510, a requesting computing device user is provided with options to select content in a user interface for sharing with a mobile device. In the example, the POS terminal provides the POS operator with the option to draw a bounding box on the display that defines the content to be shared with a customer's mobile device. At process act 520, X-Y coordinate pairs and rendering context information are provided to the requesting computing device's windows manager. The rendering context information indicates that the selected content is to be rendered for display at a requesting computing device display (as part of larger content) and that it is to be captured for sending to a receiving mobile device. In the example, a customer wishes to pay for a purchase with a debit card and swipes his debit card at a card reader attached to the NFC terminal. The POS operator draws a bounding box around a data field requesting the user's debit card pin number. X-Y coordinate pairs defining the bounding box drawn by the POS operator are provided to the windows manager of the POS terminal.

At process act 530, screen content to be retrieved from the requesting device's frame buffer is provided to the requesting device's display driver. In the example, the POS terminal's window manager provides the screen content to be provided to the display driver from the frame buffer. At process act 540, retrieved frame buffer content is sent to the mobile device. In the example, the portion of the frame buffer corresponding to the content selected for sharing by the POS operator is sent to the customer's smartphone via the NFC terminal. In alternative embodiments, the method 500 can comprise more or fewer process acts than those shown in FIG. 5.

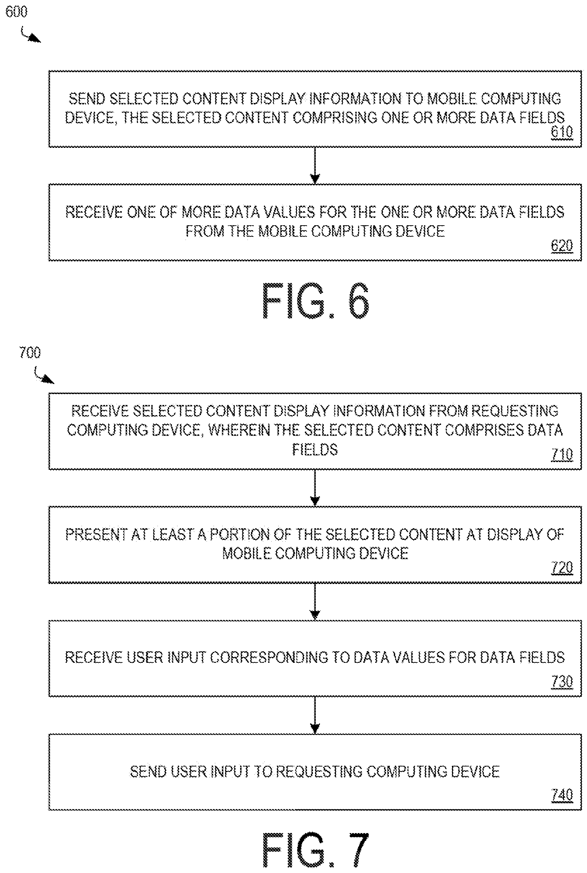

FIG. 6 is a flowchart of a third exemplary method 600 of sharing content. The method 600 can be performed by, for example, a computer at a Department of Motor Vehicle (DMV) office executing a driver license issuance software application. The computer needs to collect a driver's social security number as part of the process of issuing a driver's license. At process act 610, selected content display information is sent to a mobile computing device. The selected content display information is associated with selected content presented at a display of a requesting computing device. The selected content comprises one or more data fields. In the example, a social security number data field is presented in the DMV computer display. The operator of the DMV computer selects a "share" button in the display, causing a portion of the display containing the social security data field to be shared with the smartphone of a driver whom the operator is helping.

At process act 620, one or more data values for the one or more data fields are received from the mobile computing device. In the example, the DMV computer receives the social security number from the driver's smartphone. In alternative embodiments, the method 600 can comprise more or fewer process acts than those shown in FIG. 6.

FIG. 7 is a fourth exemplary method 700 of sharing content. The method 700 can be performed by, for example, a smartphone. At process act 710, selected content display information is received from a requesting computing device at a mobile computing device. The selected content associated with the selected content display information comprises one or more data fields. Continuing with the example discussed above in regards to FIG. 6, the driver's smartphone can receive frame buffer data from the DMV computer associated with the selectedcontent of the DMV computer's display comprising the social security data field. At process act 720, at least a portion of the selected content is presented at a display of the mobile computing device. In the example, at least a portion of the shared content from the DMVs computer display is displayed at the driver's smartphone.

At process act 730, user input is received at the mobile computing device corresponding to one or more data values for the one or more data fields. In the example, the smartphone receives input from the driver comprising his social security number. At process act 740, the user input is sent to the requesting computing device. In the example, the smartphone sends the driver's social security number to the DMV computer.

The technologies described herein have at least the following exemplary advantages. By allowing a requesting computing device to receive requested information from a user's mobile device, the accuracy of the received requested information can be improved as it removes a human intermediary from between the mobile device user and the requesting computing device. Further, it also improves the likelihood that the confidentiality of the information will not be compromised. Sensitive or private information cannot be overheard if it is entered by a mobile device user to his or her mobile device and then relayed to the requesting computing device. Moreover, data entry accuracy and user convenience can be increased by presenting shared content at the mobile device in a language in which the mobile device operator is fluent. Furthermore, mobile and requesting computing devices can be easily paired using NFC technologies, which can eliminate the need for a mobile device user from having to enter a password or other information to establish a link to a requesting computing device. Further, communicating between requesting and mobile computing devices via a peer-to-peer connection increases security by eliminating the involvement of third party devices, such as cloud computing devices that would be involved if the devices were to communicate via a network.

The technologies, techniques and embodiments described herein can be performed by any of a variety of computing devices, including mobile devices (such as smartphones, handheld computers, tablet computers, laptop computers, media players, portable gaming consoles, cameras and video recorders), non-mobile devices (such as desktop computers, servers, stationary gaming consoles, smart televisions) and embedded devices (such as devices incorporated into a vehicle). As used herein, the term "computing devices" includes computing systems and includes devices comprising multiple discrete physical components.

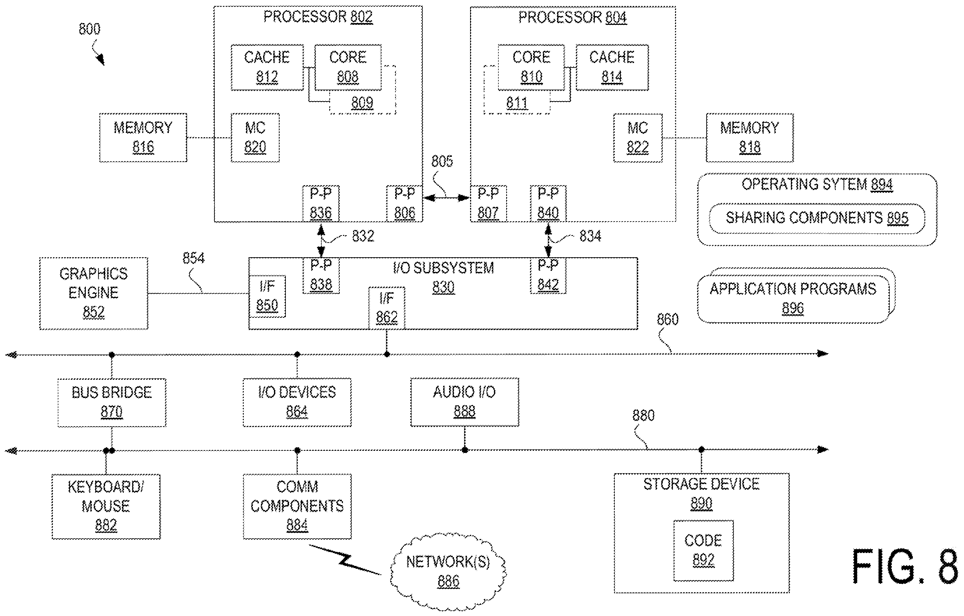

FIG. 8 is a block diagram of a second exemplary computing device 800 that can be used as a requesting computing device or a mobile computing device. The components shown in FIG. 8 can communicate with any other shown components, although not all connections are shown, for ease of illustration. The device 800 is a multiprocessor system comprising a first processor 802 and a second processor 804 and is illustrated as comprising point-to-point (P-P) interconnects. For example, a point-to-point (P-P) interface 806 of the processor 802 is coupled to a point-to-point interface 807 of the processor 804 via a point-to-point interconnection 805. It is to be understood that any or all of the point-to-point interconnects illustrated in FIG. 8 can be alternatively implemented as a multi-drop bus, and that any or all buses illustrated in FIG. 8 could be replaced by point-to-point interconnects.

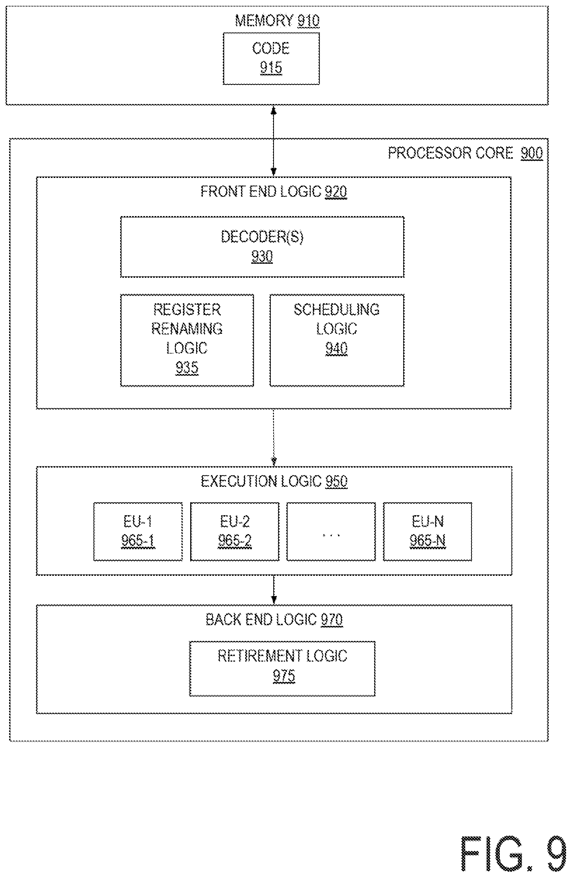

As shown in Figure 8, the processors 802 and 804 are multicore processors. Processor 802 comprises processor cores 808 and 809, and processor 804 comprises processor cores 810 and 811. Processor cores 808-911 can execute computer-executable instructions in a manner similar to that discussed below in connection with FIG. 9, or in other manners.

Processors 802 and 804 further comprise at least one shared cache memory 812 and 814, respectively. The shared caches 812 and 814 can store data (e.g., instructions) utilized by one or more components of the processor, such as the processor cores 808-909 and 810-911. The shared caches 812 and 814 can be part of a memory hierarchy for the device 800. For example, the shared cache 812 can locally store data that is also stored in a memory 816 to allow for faster access to the data by components of the processor 802. In some embodiments, the shared caches 812 and 814 can comprise multiple cache layers, such as level 1 (L1), level 2 (L2), level 3 (L3), level 6 (L4), and/or other caches or cache layers, such as a last level cache (LLC).

Although the device 800 is shown with two processors, the device 800 can comprise only one processor or more than two processors. Further, a processor can comprise one or more processor cores. A processor can take various forms such as a central processing unit, a controller, a graphics processor, an accelerator (such as a graphics accelerator or digital signal processor (DSP)) or a field programmable gate array (FPGA). A processor in a device can be the same as or different from other processors in the device. In some embodiments, the device 800 can comprise one or more processors that are heterogeneous or asymmetric to a first processor, accelerator, FPGA, or any other processor. There can be a variety of differences between the processing elements in a system in terms of a spectrum of metrics of merit including architectural, micro architectural, thermal, power consumption characteristics and the like. These differences can effectively manifest themselves as asymmetry and heterogeneity amongst the processors in a system. In some embodiments, the processors 802 and 804 reside in the same die package.

Processors 802 and 804 further comprise memory controller logic (MC) 820 and 822. As shown in FIG. 8, MCs 820 and 822 control memories 816 and 818 coupled to the processors 802 and 804, respectively. The memories 816 and 818 can comprise various types of memories, such as volatile memory (e.g., dynamic random access memories (DRAM), static random access memory (SRAM)) or non-volatile memory (e.g., flash memory). While MCs 820 and 822 are illustrated as being integrated into the processors 802 and 804, in alternative embodiments, the MCs can be logic external to a processor, and can comprise one or more layers of a memory hierarchy.

Processors 802 and 804 are coupled to an Input/Output (I/O) subsystem 830 via P-P interconnections 832 and 834. The point-to-point interconnection 832 connects a point-to-point interface 836 of the processor 802 with a point-to-point interface 838 of the I/O subsystem 830, and the point-to-point interconnection 834 connects a point-to-point interface 840 of the processor 804 with a point-to-point interface 842 of the I/O subsystem 830. Input/Output subsystem 830 further includes an interface 850 to couple I/O subsystem 830 to a graphics engine 852, which can be a high-performance graphics engine. The I/O subsystem 830 and the graphics engine 852 are coupled via a bus 854. Alternately, the bus 854 could be a point-to-point interconnection.

Input/Output subsystem 830 is further coupled to a first bus 860 via an interface 862. The first bus 860 can be a Peripheral Component Interconnect (PCI) bus, a PCI Express bus, another third generation I/O interconnection bus or any other type of bus.

Various I/O devices 864 can be coupled to the first bus 860. A bus bridge 870 can couple the first bus 860 to a second bus 880. In some embodiments, the second bus 880 can be a low pin count (LPC) bus. Various devices can be coupled to the second bus 880 including, for example, a keyboard/mouse 882, audio I/O devices 888 and a storage device 890, such as a hard disk drive, solid-state drive or other storage device for storing computer-executable instructions (code) 892. The code 892 comprises computer-executable instructions for performing technologies described herein. Additional components that can be coupled to the second bus 880 include communication device(s) 884, which can provide for communication between the device 800 and one or more wired or wireless networks 886 (e.g. Wi-Fi, cellular or satellite networks) via one or more wired or wireless communication links (e.g., wire, cable, Ethernet connection, radio-frequency (RF) channel, infrared channel, Wi-Fi channel) using one or more communication standards (e.g., IEEE 702.11 standard and its supplements).

The device 800 can comprise removable memory such flash memory cards (e.g., SD (Secure Digital) cards), memory sticks, Subscriber Identity Module (SIM) cards). The memory in device 800 (including caches 812 and 814, memories 816 and 818 and storage device 890) can store data and/or computer-executable instructions for executing an operating system 894 and application programs 896. Example data includes web pages, text messages, images, sound files, video data, biometric thresholds for particular users or other data sets to be sent to and/or received from one or more network servers or other devices by the device 800 via one or more wired or wireless networks, or for use by the device 800. The device 800 can also have access to external memory (not shown) such as external hard drives or cloud-based storage.

The operating system 894 can control the allocation and usage of the components illustrated in FIG. 8 and support one or more application programs 896. The operating system 894 can comprise selective sharing components 895, such as a SSUI, a display and touch driver interface and/or a device pairing module. The application programs 896 can include common mobile computing device applications (e.g., email applications, calendars, contact managers, web browsers, messaging applications) as well as other computing applications, such as a sharing application 896 that presents selected content received from a requesting computing device.

The device 800 can support various input devices, such as a touch screen, microphone, camera, physical keyboard, proximity sensor and trackball, and one or more output devices, such as a speaker and a display. Other possible input and output devices include piezoelectric and other haptic I/O devices. Any of the input or output devices can be internal to, external to or removably attachable with the device 800. External input and output devices can communicate with the device 800 via wired or wireless connections.

In addition, the computing device 800 can provide one or more natural user interfaces (NUIs). For example, the operating system894or applications896can comprise speech recognition logic as part of a voice user interface that allows a user to operate the device 800 via voice commands. Further, the device 800 can comprise input devices and logic that allows a user to interact with the device 800 via a body, hand or face gestures. For example, a user's hand gestures can be detected and interpreted to provide input to a gaming application.

The device 800 can further comprise one or more communication components 884. The components 884 can comprise wireless communication components coupled to one or more antennas to support communication between the system 800 and external devices. The wireless modems can support various wireless communication protocols and technologies such as Near Field Communication (NFC), Wi-Fi, Bluetooth, 4G Long Term Evolution (LTE), Code Division Multiplexing Access (CDMA), Universal Mobile Telecommunication System (UMTS) and Global System for Mobile Telecommunication (GSM). In addition, the wireless modems can support communication with one or more cellular networks for data and voice communications within a single cellular network, between cellular networks, or between the mobile computing device and a public switched telephone network (PSTN).

The device 800 can further include at least one input/output port (which can be, for example, a USB, IEEE 1394 (FireWire), Ethernet, and/or RS-232 port) comprising physical connectors, a power supply, a satellite navigation system receiver such as a GPS receiver, a gyroscope, an accelerometer and a compass. A GPS receiver can be coupled to a GPS antenna. The device 800 can further include one or more additional antennas coupled to one or more additional receivers, transmitters and/or transceivers to enable additional functions.

It is to be understood that FIG. 8 illustrates only one exemplary computing device architecture. Computing devices based on alternative architectures can be used to implement technologies described herein. For example, instead of the processors 802 and 804, and the graphics engine 852 being located on discrete integrated circuits, a computing device can comprise a SoC (system-on-a-chip) integrated circuit incorporating multiple processors, a graphics engine and additional components. Further, a computing device can connect elements via bus configurations different from that shown in FIG. 8. Moreover, the illustrated components in FIG. 8 are not required or all-inclusive, as shown components can be removed and other components added in alternative embodiments.

The computing device 800 can comprise a secure environment (not shown). The secure environment can comprise one or more secure processors and secure memory. The secure environment can utilize trusted computing components and technologies.

FIG. 9 is a block diagram of an exemplary processor core 900 to execute computer-executable instructions for implementing technologies described herein. The processor core 900can be a core for any type of processor, such as a microprocessor, an embedded processor, a digital signal processor (DSP) or a network processor. The processor core 900 can be a single-threaded core or a multithreaded core in that it may include more than one hardware thread context (or "logical processor") per core.

FIG. 9 also illustrates a memory 910 coupled to the processor 900. The memory 910 can be any memory described herein or any other memory known to those of skill in the art. The memory 910 can store computer-executable instruction 915 (code) executable by the processor core 900.

The processor core comprises front-end logic 920 that receives instructions from the memory 910. An instruction can be processed by one or more decoders 930. The decoder 930 can generate as its output a micro operation such as a fixed width micro operation in a predefined format, or generate other instructions, microinstructions, or control signals, which reflect the original code instruction. The front-end logic 920 further comprises register renaming logic 935 and scheduling logic 940, which generally allocate resources and queues operations corresponding to converting an instruction for execution.

The processor core 900 further comprises execution logic 950, which comprises one or more execution units (EUs) 965-1 through 965-N. Some processor core embodiments can include a number of execution units dedicated to specific functions or sets of functions. Other embodiments can include only one execution unit or one execution unit that can perform a particular function. The execution logic 950 performs the operations specified by code instructions. After completion of execution of the operations specified by the code instructions, back-end logic 970 retires instructions using retirement logic 975. In some embodiments, the processor core 900 allows out of order execution but requires in-order retirement of instructions. Retirement logic 970 can take a variety of forms as known to those of skill in the art (e.g., re-order buffers or the like).

The processor core 900 is transformed during execution of instructions, at least in terms of the output generated by the decoder 930, hardware registers and tables utilized by the register renaming logic 935, and any registers (not shown) modified by the execution logic 950. Although not illustrated in Figure 9, a processor can include other elements on an integrated chip with the processor core 900. For example, a processor can include additional elements such as memory control logic, one or more graphics engines, I/O control logic and/or one or more caches.

Referring back to FIG. 1, the network or cloud 160 can provide various cloud-based services that can be used to implement technologies described herein. For example, the translation of selected content to be shared or data values provided by a mobile device user can be performed by cloud-based services.

Any of the disclosed methods can be implemented as computer-executable instructions or a computer program product. Such instructions can cause a computer to perform any of the disclosed methods. Generally, as used herein, the term "computer" refers to any computing device or system described or mentioned herein, or any other computing device. Thus, the term "computer-executable instruction" refers to instructions that can be executed by any computing device described or mentioned herein, or any other computing device.

The computer-executable instructions or computer program products as well as any data created and used during implementation of the disclosed technologies can be stored on one or more tangible computer-readable storage media, such as optical media discs (e.g., DVDs, CDs), volatile memory components (e.g., DRAM, SRAM), or non-volatile memory components (e.g., flash memory, disk drives). Computer-readable storage media can be contained in computer-readable storage devices such as solid-state drives, USB flash drives, and memory modules. Alternatively, the computer-executable instructions can be performed by specific hardware components that contain hardwired logic for performing all or a portion of disclosed methods, or by any combination of computer-readable storage media and hardware components.

The computer-executable instructions can be part of, for example, a dedicated software application or a software application that is accessed via a web browser or other software application (such as a remote computing application). Such software can be executed, for example, on a single computing device or in a network environment using one or more network computers. Further, it is to be understood that the disclosed technology is not limited to any specific computer language or program. For instance, the disclosed technologies can be implemented by software written in C++, Java, Perl, JavaScript, Adobe Flash, or any other suitable programming language. Likewise, the disclosed technologies are not limited to any particular computer or type of hardware. Certain details of suitable computers and hardware are known and need not be set forth in detail in this disclosure.

Furthermore, any of the software-based embodiments (comprising, for example, computer-executable instructions for causing a computer to perform any of the disclosed methods) can be uploaded, downloaded or remotely accessed through a suitable communication means. Such suitable communication means include, for example, the Internet, the World Wide Web, an intranet, cable (including fiber optic cable), magnetic communications, electromagnetic communications (including RF, microwave, and infrared communications), electronic communications, or other such communication means.

As used in this application and in the claims, a list of items joined by the term "and/or" can mean any combination of the listed items. For example, the phrase "A, B and/or C" can mean A; B; C; A and B; A and C; B and C; or A, B and C. As used in this application and in the claims, a list of items joined by the term "at least one of" or "one or more of" can mean any combination of the listed terms. For example, the phrases "at least one of A, B or C" or "one or more of A, B or C" can mean A; B; C; A and B; A and C; B and C; or A, B and C.

The disclosed methods, apparatuses and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially can in some cases be rearranged or performed concurrently. Moreover, for the sake of simplicity, the attached figures may not show the various ways in which the disclosed methods can be used in conjunction with other methods.

The following examples pertain to further embodiments.
Example 1. One or more computer-readable storage media storing computer-executable instructions for causing a computer to perform a method, the method comprising:sending selected content display information to a receiving computing device, the selected content display information being associated with selected content presented at a display of a requesting computing device, the selected content comprising one or more data fields; and receiving one or more data values for the one or more data fields from the receiving computing device.
Example 2.The one or more computer-readable storage media of claim 1, wherein the requesting computing device is a mobile computing device.
Example 3.The one or more computer-readable storage media of claim 1, the method further comprising selecting the selected content based at least on user input received at the requesting computing device.
Example 4.The one or more computer-readable storage media of claim 1, wherein the receiving one or more data values comprises receiving at least a portion of the one or more data values; the method further comprising updating the selected content presented at the display based on the at least a portion of the one or more data values.
Example 5. The one or more computer-readable storage media of claim 4, the method further comprising sending updatedselected content display information to the receiving computing device based at least on the updated selected content displayed at the display.
Example 6. The one or more computer-readable storage media of claim 1, wherein at least one of the one or more data values are not displayed in the display of the requesting computing device.
Example 7. The one or more computer-readable storage media of claim 1, the method further comprising presenting in the display masking characters in at least one of the data fields in the shared content.
Example 8. The one or more computer-readable storage media of claim 1, wherein the selected content display information comprises one or more data field indicators for the one or more data fields.
Example 9.The one or more computer-readable storage media of claim 1, wherein the received one or more data values are in a first language and the one or more data fields are presented in the display in a second language.
Example 10. The one or more computer-readable storage media of claim 1, wherein the selected content is presented in the display in a first language and the selected content display information comprises information corresponding to at least a portion of the selected content translated into a second language.
Example 11. The one or more computer-readable storage media of claim 10, the method further comprising translating at least a portion of the shared content, the translating comprising:sending the at least a portion of the selected content to a third computing device for translation; and receiving translated text from the third computing device.
Example 12.The one or more computer-readable storage media of claim 1, wherein the sending and the receiving is performed over a direct peer-to-peer connection between the requesting computing device and the receiving computing device.
Example 13. The one or more computer-readable storage media of claim 12, the method further comprising establishing the peer-to-peer connection using Near Field Communication technologies.
Example 14.The one or more computer-readable storage media of claim 1, wherein the sending and the receiving is performed over a communication link comprising at least one additional computing device.
Example 15.The one or more computer-readable storage media of claim 1, wherein the display is a first display of the requesting computing device and the requesting computing device comprises a second display, the method further comprising displaying the selected content at the first display in a first language and displaying the selected content at the second display in a second language.
Example 16.The one or more computer-readable storage media of claim 1, the method further comprising:displaying the one or more data fields at a display of the receiving computing device; and receiving the one or more data values for the one or more data fields at the receiving computing device.
Example 17.The one or more computer-readable storage media of claim 1, wherein the receiving computing device is a mobile computing device.
Example 18.The one or more computer-readable storage media of claim 1, the method further comprising establishing a secure connection between the requesting computing device and the receiving computing device, wherein a third computing device is utilized at least in part for authenticating the receiving computing device.
Example 19.The one or more computer-readable storage media of claim 1, the method further comprising:sending the selected content display information to one or more additional receiving computing devices; and receiving one or more data values for the one or more data fields from at least one of the one or more additional computing devices.
Example 20.One or more computer-readable storage media storing computer-executable instructions for causing a computer to perform a method of receiving selected content, the method comprising:receiving selected content display information from a requesting computing device at a receiving computing device, wherein selected content associated with the selected content display information comprises one or more data fields;presenting at least a portion of the selected content ata display of the receiving computing device;receiving user input at the receiving computing device corresponding to one or more data values for the one or more data fields; and sending the user input to the requesting computing device.
Example 21.The one or more computer-readable storage media of claim 20,wherein at least one of the data fields in the at least a portion of the selected content presented at the display of the mobile computing device is auto-populated.
Example 22.The one or more computer-readable storage media of claim 20, wherein the user input is sent to the requesting computing device as the user input is received at the receiving computing device.
Example 23. The one or more computer-readable storage media of claim 20, the method further comprising receiving updated selected content display information, differences in the updated selected content display information and the selected content display information being based at least in part on the user input sent to the requesting computing devices.
Example 24. The one or more computer-readable storage media of claim 20, wherein the at least a portion of the selected content displayed at the display is displayed in a language different from a language indicated by the shard content display information.
Example 25.The one or more computer-readable storage media of claim 20, wherein the user input is sent to the requesting device after all of the user input corresponding to at least one of the one or more data values has been received at the receiving computing device.
Example 26. The one or more computer-readable storage media of claim 20, the method further comprising authenticating the requesting computing device.
Example 27. A method of sharing content, the method comprising:sending selected content display information to a receiving computing device, the selected content display information being associated with selected content presented at a display of a requesting computing device, the selected content comprising one or more data fields; and receiving one or more data values for the one or more data fields from the receiving computing device.
Example 28. A method of sharing content, the method comprising:receiving selected content display information from a requesting computing device at a receiving computing device, wherein selected content associated with the selected content display information comprises one or more data fields;presenting at least a portion of the selected content ata display of the receiving computing device;receiving user input at the receiving computing device corresponding to one or more data values for the one or more data fields; and sending the user input to the requesting computing device.
Example 29.At least one computing device programmed to carry out a method, the method comprising:using the at least one computer for:sending selected content display information to a receiving computing device, the selected content display information being associated with selected content presented at a display of a requesting computing device, the selected content comprising one or more data fields; and receiving one or more data values for the one or more data fields from the receiving computing device.
Example 30. At least one computing device programmed to carry out a method, the method comprising:using the at least one computer for:receiving selected content display information from a requesting computing device at a receiving computing device, wherein selected content associated with the selected content display information comprises one or more data fields;presenting at least a portion of the selected content ata display of the receiving computing device;receiving user input at the receiving computing device corresponding to one or more data values for the one or more data fields; and sending the user input to the requesting computing device.
Example 31. A computing device comprising a means to perform any one of the methods recited in claims 1-26.

## Claims

1. One or more computer-readable storage media storing computer-executable instructions for causing a computer to perform a method, in that the method comprises:
scanning (410), by a requesting computing device (110, 120), for mobile devices that support the secure sharing of selected content (200) by establishing a wireless connection with nearby mobile devices and querying the devices whether they host a sharing application with which selected content (200) can be presented at the mobile device;
pairing (420) the requesting computing device (110, 120) with a receiving computing device (130, 220) selected from the mobile devices in response to this mobile device being tapped to a near-field communication, NFC, enabled terminal coupled to the requesting computing device (110, 120);
sending (610) selected content (200) display information to the receiving computing device (130, 220), the selected content display information being associated with selected content (200) presented at a display of the requesting computing device (110, 120), the selected content comprising one or more data fields (240-243); and
receiving (620) one or more data values (290-293) for the one or more data fields (240-243) from the receiving computing device (220), and receiving the one or more data values by an application on the requesting computing device (110, 120);
receiving, by the requesting computing device (110, 120), at least one privacy indicator from the receiving computing device (130, 220), the at least one privacy indicator being selected by the user (150) at the receiving computing device (130, 220) and configured to cause at least one of the one or more data values (290-293) to not be displayed in the display of the requesting comping device (110, 120) by:
masking the at least one data value by displaying masking characters in the data fields (240-243), and/or
leaving the selected content (200) un-updated in response to receiving data values (290-293),
so as to keep the received data values (290-293) from being made known to the operator (140) of the requesting computing device (110, 120).

2. The one or more computer-readable storage media of claim 1, the method further comprising: in response to bringing the near-field communication, NFC, enabled receiving computing device (130, 220) and the NFC enabled requesting computing device (110, 120) within several centimeters of each other, securely pairing (420) the requesting computing device (110, 120) with the receiving computing device (130, 220) by means of the NFC.

3. The one or more computer-readable storage media of claim 1, the method further comprising selecting the selected content (200) based at least on user (140) input received at the requesting computing device (110, 120).

4. The one or more computer-readable storage media of claim 1, wherein the receiving (620) one or more data values (290-293) comprises receiving at least a portion of the one or more data values (290-293); the method further comprising updating the selected content (200) presented at the display based on the at least a portion of the one or more data values (290-293).

5. The one or more computer-readable storage media of claim 3, the method further comprising sending updated selected content (200) display information to the receiving computing device (130, 220) based at least on the updated selected content (200) displayed at the display.

6. The one or more computer-readable storage media of claim 1, wherein the selected content (200) display information comprises one or more data field indicators for the one or more data fields (240-243).

7. The one or more computer-readable storage media of claim 1, wherein the received one or more data values (290-293) are in a first language and the one or more data fields (240-243) are presented in the display in a second language.

8. The one or more computer-readable storage media of claim 1, wherein the selected content (200) is presented in the display in a first language and the selected content (200) display information comprises information corresponding to at least a portion of the selected content (200) translated into a second language.

9. The one or more computer-readable storage media of claim 8, the method further comprising translating (470) at least a portion of the shared content, the translating (470) comprising:
sending the at least a portion of the selected content to a third computing device for translation; and
receiving translated text from the third computing device.

10. The one or more computer-readable storage media of claim 1, wherein the sending and the receiving is performed over a direct peer-to-peer connection using Near Field Communication technologies between the requesting computing device (110, 120) and the receiving computing device (130, 220).

11. The one or more computer-readable storage media of claim 1, wherein the display is a first display of the requesting computing device (110, 120) and the requesting computing device (110, 120) comprises a second display, the method further comprising displaying the selected content (200) at the first display in a first language and displaying the selected content at the second display in a second language.

12. The one or more computer-readable storage media of claim 1, the method further comprising:
displaying the one or more data fields (240-243) at a display of the receiving computing device (110, 120); and
receiving the one or more data values (290-293) for the one or more data fields (240-243) at the receiving computing device.

13. The one or more computer-readable storage media of claim 1, the method further comprising:
sending the selected content (200) display information to one or more additional receiving computing devices (130, 220); and
receiving one or more data values (290-293) for the one or more data fields (240-243) from at least one of the one or more additional computing devices (130, 220).

14. A method of sharing content (200), the method comprising any one of the methods described in claims 1-13.

15. At least one computing device (110, 120, 130, 220) comprising any of the one or more computer-readable storage media of any one of claims 1-13.

## Patentansprüche

1. Computerlesbares Speichermedium bzw. mehrere computerlesbare Speichermedien, die computerausführbare Anweisungen zum Veranlassen eines Computers umfassen, ein Verfahren durchzuführen, wobei das Verfahren umfasst:
Scannen (410), durch eine anfordernde Computervorrichtung (110, 120), nach Mobilgeräten, welche die sichere gemeinsame Nutzung von ausgewählten Inhalten (200) durch Herstellen einer drahtlosen Verbindung mit in der Nähe befindlichen Mobilgeräten und Abfragen der Geräte unterstützen, ob sie eine Datenfreigabe-Anwendung hosten, mit der die ausgewählten Inhalte (200) auf dem Mobilgerät dargestellt werden können;
Koppeln (420) der anfordernden Computervorrichtung (110, 120) mit einer empfangenden Computervorrichtung (130, 220), die aus den Mobilgeräten in Reaktion darauf ausgewählt wird, dass dieses Mobilgerät mit einem Nahfeldkommunikation(Near-Field Communication, NFC)-fähigen Endgerät verbunden ist, welches mit der anfordernden Computervorrichtung (110, 120) gekoppelt ist;
Senden (610) einer ausgewählten Anzeigeinformation der Inhalte (200) an die empfangende Computervorrichtung (130, 220), wobei die ausgewählte Inhaltsanzeigeinformation ausgewählten Inhalten (200) zugeordnet ist, die auf einer Anzeigevorrichtung der anfordernden Computervorrichtung (110, 120) dargestellt werden, wobei die ausgewählten Inhalte ein oder mehrere Datenfelder (240-243) umfassen; und
Empfangen (620) eines oder mehrerer Datenwerte (290-293) für das eine oder die mehreren Datenfelder (240-243) von der empfangenden Computervorrichtung (220) und Empfangen des einen oder der mehreren Datenwerte durch eine Anwendung auf der anfordernden Computervorrichtung (110, 120);
Empfangen, durch die anfordernde Computervorrichtung (110, 120), mindestens eines Datenschutzindikators von der empfangenden Computervorrichtung (130, 220), wobei der mindestens eine Datenschutzindikator durch den Benutzer (150) auf der empfangenden Computervorrichtung (130, 220) ausgewählt wird und konfiguriert ist, um zu bewirken, dass mindestens einer des einen oder der mehreren Datenwerte (290-293) nicht in der Anzeigevorrichtung der anfordernden Computervorrichtung (110, 120) angezeigt werden soll, durch:
Ausblenden des mindestens einen Datenwerts durch Anzeigen von Maskenzeichen in den Datenfeldern (240-243), und/oder
Belassen der ausgewählten Inhalte (200) im nicht aktualisierten Zustand in Reaktion auf das Empfangen von Datenwerten (290-293),
um zu verhindern, dass die empfangenen Datenwerte (290-293) dem Bediener (140) der anfordernden Computervorrichtung (110, 120) mitgeteilt werden.

2. Computerlesbares Speichermedium bzw. mehrere computerlesbare Speichermedien nach Anspruch 1, das Verfahren ferner umfassend: in Reaktion auf das Zusammenbringen der Nahfeldkommunikation(Near-Field Communication, NFC)-fähigen empfangenden Computervorrichtung (130, 220) und der NFC-fähigen anfordernden Computervorrichtung (110, 120) in einen Nahbereich von wenigen Zentimetern, sicheres Koppeln (420) der anfordernden Computervorrichtung (110, 120) mit der empfangenden Computervorrichtung (130, 220) mittels der NFC.

3. Computerlesbares Speichermedium bzw. mehrere computerlesbare Speichermedien nach Anspruch 1, wobei das Verfahren ferner das Auswählen der ausgewählten Inhalte (200) basierend auf mindestens einer Eingabe des Benutzers (140), die von der anfordernden Computervorrichtung (110, 120) empfangen wird, umfasst.

4. Computerlesbares Speichermedium bzw. mehrere computerlesbare Speichermedien nach Anspruch 1, wobei das Empfangen (620) eines oder mehrerer Datenwerte (290-293) Empfangen mindestens eines Teils des einen oder der mehreren Datenwerte (290-293) umfasst; wobei das Verfahren ferner Aktualisieren der ausgewählten Inhalte (200) umfasst, die auf der Anzeigevorrichtung basierend auf dem mindestens einen Teil des einen oder der mehreren Datenwerte (290-293) dargestellt werden.

5. Computerlesbares Speichermedium bzw. mehrere computerlesbare Speichermedien nach Anspruch 3, wobei das Verfahren ferner Senden einer Anzeigeinformation der aktualisierten ausgewählten Inhalte (200) an die empfangende Computervorrichtung (130, 220) umfasst, basierend auf mindestens den aktualisierten ausgewählten Inhalten (200), die auf der Anzeigevorrichtung angezeigt werden.

6. Computerlesbares Speichermedium bzw. mehrere computerlesbare Speichermedien nach Anspruch 1, wobei die Anzeigeinformation der ausgewählten Inhalte (200) einen oder mehrere Datenfeldindikatoren für das eine oder die mehreren Datenfelder (240-243) umfasst.

7. Computerlesbares Speichermedium bzw. mehrere computerlesbare Speichermedien nach Anspruch 1, wobei die empfangenen ein oder mehreren Datenwerte (290-293) eine erste Sprache haben und das eine oder die mehreren Datenfelder (240-243) in einer zweiten Sprache in der Anzeigevorrichtung dargestellt werden.

8. Computerlesbares Speichermedium bzw. mehrere computerlesbare Speichermedien nach Anspruch 1, wobei die ausgewählten Inhalte (200) in einer ersten Sprache in der Anzeigevorrichtung dargestellt werden, und die Anzeigeinformation der ausgewählten Inhalte (200) eine Information umfasst, die mindestens einem Teil der in eine zweite Sprache übersetzten Inhalte (200) entspricht.

9. Computerlesbares Speichermedium bzw. mehrere computerlesbare Speichermedien nach Anspruch 8, wobei das Verfahren ferner das Übersetzen (470) mindestens eines Teils der gemeinsam genutzten Inhalte umfasst, wobei das Übersetzen (470) umfasst:
Senden des mindestens einen Teils der ausgewählten Inhalte zur Übersetzung an eine dritte Computervorrichtung; und
Empfangen von übersetztem Text von der dritten Computervorrichtung.

10. Computerlesbares Speichermedium bzw. mehrere computerlesbare Speichermedien nach Anspruch 1, wobei das Senden und das Empfangen über eine direkte Peer-to-Peer-Verbindung unter Verwendung von Nahfeldkommunikationstechnologien zwischen der anfordernden Computervorrichtung (110, 120) und der empfangenden Computervorrichtung (130, 220) durchgeführt wird.

11. Computerlesbares Speichermedium bzw. mehrere computerlesbare Speichermedien nach Anspruch 1, wobei die Anzeigevorrichtung eine erste Anzeigevorrichtung der anfordernden Computervorrichtung (110, 120) ist und die anfordernde Computervorrichtung (110, 120) eine zweite Anzeigevorrichtung umfasst, wobei das Verfahren ferner Anzeigen der ausgewählten Inhalte (200) in einer ersten Sprache auf der ersten Anzeigevorrichtung und Anzeigen der ausgewählten Inhalte in einer zweiten Sprache auf der zweiten Anzeigevorrichtung umfasst.

12. Computerlesbares Speichermedium bzw. mehrere computerlesbare Speichermedien nach Anspruch 1, das Verfahren ferner umfassend:
Anzeigen des einen oder der mehreren Datenfelder (240-243) auf einer Anzeigevorrichtung der empfangenden Computervorrichtung (110, 120); und
Empfangen des einen oder der mehreren Datenwerte (290-293) für das eine oder die mehreren Datenfelder (240-243) auf der empfangenden Computervorrichtung.

13. Computerlesbares Speichermedium bzw. mehrere computerlesbare Speichermedien nach Anspruch 1, das Verfahren ferner umfassend:
Senden der Anzeigeinformation der ausgewählten Inhalte (200) an eine oder mehrere zusätzliche empfangende Computervorrichtungen (130, 220); und
Empfangen eines oder mehrerer Datenwerte (290-293) für das eine oder die mehreren Datenfelder (240-243) von mindestens einer der einen oder der mehreren zusätzlichen Computervorrichtungen (130, 220).

14. Verfahren zur gemeinsamen Nutzung von Inhalten (200), wobei das Verfahren ein beliebiges der in den Ansprüchen 1 bis 13 beschriebenen Verfahren umfasst.

15. Mindestens eine Computervorrichtung (110, 120, 130, 220), die ein beliebiges des einen oder der mehreren computerlesbaren Speichermedien nach einem der Ansprüche 1 bis 13 umfasst.

## Revendications

1. Support (s) de stockage lisible (s) par ordinateur comportant des instructions exécutables par ordinateur pour entraîner un ordinateur à exécuter un procédé, lequel procédé comprend :
la recherche par balayage (410), avec un dispositif informatique demandeur (110, 120), des dispositifs mobiles qui prennent en charge le partage sécurisé d'un contenu choisi (200) en établissant une connexion sans fil avec des dispositifs mobiles proches et interroger les dispositifs pour savoir s'ils hébergent une application de partage avec laquelle le contenu choisi (200) peut être présenté au niveau du dispositif mobile ;
l'appariement de dispositif informatique demandeur (110, 120) avec un dispositif informatique de réception (130, 220) choisi parmi les dispositifs mobiles lorsque ce dispositif mobile est connecté à un terminal à capacité de communication en champ proche (NFC) couplé au dispositif informatique demandeur (110, 120) ;
l'envoi (610) des informations d'affichage de contenu choisi (200) au dispositif informatique de réception (130, 220), les informations d'affichage de contenu choisi étant associées avec le contenu choisi (200) présenté au niveau d'un affichage du dispositif informatique demandeur (110, 120), le contenu choisi comprenant un ou plusieurs champs de données (240-243) ; et
la réception (620) d'une ou plusieurs valeurs de données (290-293) pour le ou les champs de données (240-243) depuis le dispositif informatique de réception (220) et la réception de la ou des valeurs de données par une application sur le dispositif informatique demandeur (110, 120) ;
la réception, par le dispositif informatique demandeur (110, 120), d'au moins un indicateur d'intimité depuis le dispositif informatique de réception (130, 220), l'au moins un indicateur d'intimité étant choisi par l'utilisateur (150) au niveau du dispositif informatique de réception (130, 220) et conçu de sorte à ce qu'au moins une de la ou des valeurs de données (290-293) ne soit pas affichée dans l'affichage du dispositif informatique demandeur (110, 120) en :
masquant l'au moins une valeur de données en affichant des caractères de masquage dans les champs de données (240-243), et/ou
en laissant le contenu choisi (200) non mis à jour suite à la réception des valeurs de données (290-293),
de manière à empêcher que les valeurs de données (290-293) reçues deviennent connues de l'opérateur (140) du dispositif informatique demandeur (110, 120).

2. Support(s) de stockage lisible(s) par ordinateur selon la revendication 1, le procédé comprenant en outre : après avoir amené le dispositif informatique de réception (130, 220) activé en communication en champ proche (NFC) et le dispositif informatique demandeur (110, 120) activé NFC à quelques centimètres l'un de l'autre, l'appariement de manière sécurisée (420) du dispositif informatique demandeur (110, 120) et du dispositif informatique de réception (130, 220) par le biais de la NFC.

3. Support (s) de stockage lisible (s) par ordinateur selon la revendication 1, le procédé comprenant en outre le choix du contenu choisi (200) en fonction au moins de l'entrée d'utilisateur (140) reçue au niveau du dispositif informatique demandeur (110, 120).

4. Support(s) de stockage lisible (s) par ordinateur selon la revendication 1, dans lequel la réception (620) de la ou des valeurs de données (290-293) comprend la réception d'une partie au moins de la ou des valeurs de données (290-293) ; le procédé comprenant en outre la mise à jour du contenu choisi (200) présenté au niveau de l'affichage en fonction de l'au moins une partie de la ou des valeurs de données (290-293).

5. Support(s) de stockage lisible(s) par ordinateur selon la revendication 3, le procédé comprenant en outre l'envoi des informations d'affichage de contenu choisi (200) mis à jour au dispositif informatique de réception (130, 220) en fonction au moins du contenu choisi (200) mis à jour affiché au niveau de l'affichage.

6. Support(s) de stockage lisible(s) par ordinateur selon la revendication 1, dans le(s)quel(s) les informations d'affichage de contenu choisi (200) comprennent un ou plusieurs indicateurs de champ de données pour le ou les champs de données (240-243).

7. Support(s) de stockage lisible(s) par ordinateur selon la revendication 1, dans le(s)quel(s) la ou les valeurs de données (290-293) reçues sont dans un premier langage, et le ou les champs de données (240-243) sont présentés dans l'affichage dans un second langage.

8. Support(s) de stockage lisible(s) par ordinateur selon la revendication 1, dans le(s)quel(s) le contenu choisi (200) est présenté dans l'affichage dans un premier langage et les informations d'affichage de contenu choisi (200) comprennent des informations correspondant à une partie au moins du contenu choisi (200) traduites dans un second langage.

9. Support(s) de stockage lisible(s) par ordinateur selon la revendication 8, le procédé comprenant en outre la traduction (470) d'une partie au moins du contenu partagé, la traduction (470) comprenant :
l'envoi d'au moins une partie du contenu choisi à un troisième dispositif informatique pour la traduction ; et
la réception du texte traduit depuis le troisième dispositif informatique.

10. Support(s) de stockage lisible(s) par ordinateur selon la revendication 1, dans le(s)quel(s) l'envoi et la réception sont effectués sur une connexion pair-à-pair directe en utilisant des techniques de communication en champ proche entre le dispositif informatique demandeur (110, 120) et le dispositif informatique de réception (130, 220).

11. Support(s) de stockage lisible(s) par ordinateur selon la revendication 1, dans le(s)quel(s) l'affichage est un premier affichage du dispositif informatique demandeur (110, 120) et le dispositif informatique demandeur (110, 120) comprend un second affichage, le procédé comprenant en outre l'affichage du contenu choisi (200) au niveau du premier affichage dans un premier langage et l'affichage du contenu choisi au niveau du second affichage dans un second langage.

12. Support(s) de stockage lisible(s) par ordinateur selon la revendication 1, le procédé comprenant en outre :
l'affichage du ou des champs de données (240-243) au niveau d'un affichage du dispositif informatique de réception (110, 120) ; et
la réception de la ou des valeurs de données (290-293) pour le ou les champs de données (240-243) au niveau du dispositif informatique de réception.

13. Support(s) de stockage lisible(s) par ordinateur selon la revendication 1, le procédé comprenant en outre :
l'envoi des informations d'affichage du contenu choisi (200) vers un ou plusieurs dispositifs informatiques de réception (130, 220) supplémentaires ; et
la réception de la ou des valeurs de données (290-293) pour le ou les champs de données (240-243) depuis au moins un du ou des dispositifs informatiques (130, 220) supplémentaires.

14. Procédé de partage de contenu (200), le procédé comprenant l'un quelconque des procédés décrits dans les revendications 1-13.

15. Au moins un dispositif informatique (110, 120, 130, 220) comprenant l'un quelconque du ou des supports de stockage lisibles par ordinateur selon l'une quelconque des revendications 1-13.
